# EUROPEAN PATENT SPECIFICATION

(11) **EP 2 909 064 B1**
(45) Date of publication and mention of the grant of the patent: **03.01.2018**
(21) Application number: 13785375.0
(22) Date of filing: 16.10.2013
(51) Int. Cl.: B60R 16/023, H02G 3/08

(54) **HOUSING FOR A POWER DISTRIBUTOR**
GEHÄUSE FÜR EINEN LEISTUNGSVERTEILER
BOÎTIER POUR UN DISTRIBUTEUR D'ÉLECTRICITÉ

(30) Priority: 16.10.2012 DE 102012218806
(43) Date of publication of application: 26.08.2015
(73) Proprietor: TE Connectivity Germany GmbH, 64625 Bensheim (DE)
(72) Inventor: JETTER, Rolf, 64297 Darmstadt (DE); BUCK, Carsten, 68623 Lampertheim (DE); KOSMALSKLI, Christoph, 64291 Darmstadt (DE); CHRITZ, Gunther, 69488 Birkenau (DE)
(74) Representative: Patentanwaltskanzlei WILHELM & BECK
(86) International application number: PCT/EP2013/071647
(87) International publication number: WO 2014/060485

(56) References cited:
- DE-A1-102006 028 202
- DE-A1-102010 042 418
- US-A- 5 023 752
- US-A1- 2010 288 757
- US-A1- 2011 003 517

## Description

The invention relates to a housing for a power distributor according to patent claim 1.

In the prior art there are known various housings for power distributors, in which electrical connector contacts are assembled. The assembly of the connector contact is relatively complex. In addition, precise assembly of the connector contact requires a precise operating method. Furthermore, the housing and the electrical connector contact are subjected to mechanical effects, which may lead to a loosening and/or damage of the housing and/or the connector contact.

US 2011/0003517 A1 discloses a housing for a power distributor for a vehicle, having a recess for receiving an electrical connector contact wherein the recess is delimited laterally by at least one sidewall of the housing, the at least one sidewall having a groove, the groove being provided in order to receive a flap of the connector contact when the connector contact is assembled and to orientate the connector contact in the direction towards a desired assembly position and to retain it against retention in the assembly position. US 2010/0288757 A1 discloses a housing for a power distributor for a vehicle, having a recess for receiving an electrical connector contact, wherein the recess is delimited laterally by three sidewalls of the housing, a covering cap is moveably secured to the housing in the region of a free side which shows hinges of the recess. The covering cap can be moved from an open position into a closed position, the electrical connector contact can be introduced into the recess in the open position and the covering cap covers the inserted connector contact in the closed position.

DE 10 2010 042 418 A1 also discloses such a housing.

US 5,023,752 discloses an electrical power distribution centre with a housing, wherein the housing has additional retention means which are arranged with spacing from the recess, the additional retention means being provided in order to releaseably secure the covering cap to the housing and to keep it in a state of readiness for assembly on the recess.

DE 10 2006 028 202 A1 discloses an electrical connector with a hinged cover, which is connected in one piece to a connector housing. At least one guide slot is formed in a cover portion of the cover and opens outwards towards the free end of the cover portion. A cable is positioned in the guide slot upon closing the cover, and the guide slot is constricted when the cover is closed so that the cable is fixed inside it. The result is a secure fixing of the cable, the flow cost in terms of parts and assembly.

An object of the invention is to provide an improved housing and an improved connector contact. The object of the invention is achieved by the housing according to patent claim 1.

An advantage of the housing described is that precise assembly of the electrical connector contact is possible in a simple manner. This is achieved by the provision of a groove which receives a flap of the connector contact and consequently orientates the connector contact during assembly in the direction towards a desired assembly position and secures it in the assembly position against rotation. Consequently, over a short path, precise orientation of the connector contact is possible with little complexity. In addition, the positive-locking connection between the connector contact and the groove of the housing provides additional stabilisation of the connector contact on the housing. The connector contact is thereby better protected against loosening and/or damage. In addition, owing to the support of the connector contact in the groove, greater torque can be absorbed, without the torque being transmitted to the housing or the components thereof.

The housing has additional retention means which are arranged with spacing from the recess, the additional retention means being provided in order to releasably secure a covering cap to the housing. The covering cap can consequently already be secured to the housing before the assembly of the connector contact and can be transported with the housing. Only after assembly of the connector contact is the covering cap removed from the additional retention means and secured in the recess in such a manner that the connector contact is covered, in particular electrically insulated.

The additional retention means are provided in the region of a second recess, the second recess being provided in order to receive the covering cap. In this manner, the covering cap may be fixed to the housing so as to be protected against damage and transported with the housing. It is thereby ensured to an increased extent that the covering cap does not become lost and/or damaged during transport.

Other embodiments are set out in the dependent claims.

In a development, there is provided in the housing a second groove which receives a second flap of the electrical connector contact for guiding and stabilising. Owing to the provision of the second groove, a further simplification of the assembly operation is achieved. In addition, the connector contact is orientated in a more precise manner with respect to the fixed assembly position. Furthermore, in the assembled state, the connector contact is still better protected against rotation. This is achieved by the positive-locking reception of the second flap of the connector contact in the groove of the housing.

In another embodiment, a side wall of the recess is provided as a support face for the assembled connector contact, the side wall having a face which is constructed so as to be at least partially parallel with an associated face of the connector contact. In this manner, the connector contact is additionally protected with respect to damage or the introduction of a torque. According to the invention the housing has retention means in the region of the recess in order to releasably secure a covering cap for covering an assembled connector contact on the housing. It is thereby possible to subsequently secure a covering cap to the housing.

In another embodiment, a third recess is provided, the third recess being provided in order to receive an information card.

It is consequently possible to accommodate the information card directly on the housing in a space-saving manner.

Subsequent assembly of the covering cap on the housing is consequently unnecessary.

In another embodiment, there is provided an electrical connector contact, the connector contact having a guiding portion and a contact portion. The guiding portion has at least one flap, the flap being provided in order to engage in a groove of the housing when the connector contact is assembled. The connector contact can thereby be orientated and guided in the direction towards an assembly face in a fixed assembly position.

In another embodiment, there is provided a second flap which is also provided to guide the connector contact into the predetermined assembly position. The connector contact described can be moved over a short path into a precise assembly position.

In another embodiment, the guiding portion is arranged relative to the contact portion at an angle which is not equal to 180°. The guiding portion is constructed so as to be supported on a support face of the housing. On the one hand, the assembly is thereby facilitated. On the other hand, the electrical connector contact can be protected against the introduction of a torque, for example, via the electrical line which is connected to the electrical connector contact. A release of the electrical contact from the housing is consequently made more difficult.

The invention is explained in greater detail below with reference to the following Figures, in which:
Figure 1 shows a connector contact;
Figure 2 is a schematic illustration of a portion of a housing;
Figure 3 shows the housing with an assembled connector contact and a covering cap which is held in a state of readiness,
Figure 4 is a schematic illustration of a partial cross-section through the assembled connector contact;
Figure 5 is a partial perspective illustration of the recess in the region of a groove;
Figure 6 is a schematic plan view of the assembled connector contact;
Figure 7 is a plan view of an assembled connector contact, which is covered with a covering cap;
Figure 8 is a schematic exploded view of an embodiment of a housing in the form of a power distributor;
Figure 9 is a side view of the power distributor;
Figure 10 is another side view of the power distributor;
Figure 11 is another embodiment of a portion of a housing having a covering cap;
Figure 12 shows the other housing with an assembled covering cap; and
Figure 13 shows the other housing having a covering cap in the closure position.

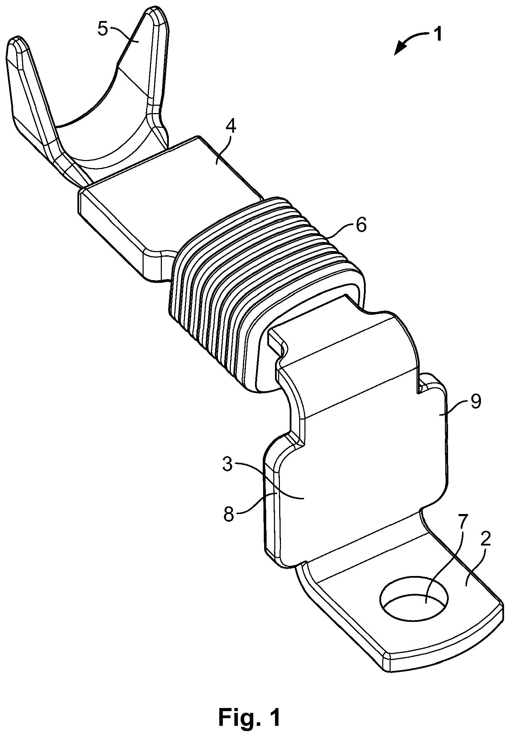

Figure 1 is a perspective view of a connector contact 1 which is constructed in the illustrated embodiment as an angled cable lug. The connector contact 1 has a contact portion 2 having a contact hole 7. A guiding portion 3 adjoins the contact portion 2. The contact portion 2 and the guiding portion 3 are perpendicular relative to each other in the illustrated embodiment. Depending on the embodiment selected, other angles may also be provided. However, the contact portion is preferably constructed so as to be angled relative to the guiding portion. A first and a second flap 8, 9 are formed laterally on the guiding portion 3. The first and the second flap 8, 9 protrude laterally from the guiding portion 3. The guiding portion 3 merges via a 90° bend into a connection piece 4. In the example illustrated, the contact portion 2 and the connection piece 4 are arranged parallel with each other. At the end of the connection piece 4 there is formed a crimp flap 5 which serves to mechanically and electrically contact an electrical conductor of a cable. For example, the electrical conductor may be a portion of a cable harness of a vehicle. The connection piece 4 has adjacent to the guiding portion 3 a sealing member 6. The sealing member 6 surrounds the connection piece 4 on a portion.

Using the lateral flaps 8, 9, the connector contact 1 has the advantage that the lateral flaps 8, 9 are inserted into a housing into corresponding receiving members, for example, in the form of grooves. The securing is thereby significantly improved within a short path. In addition, a high level of vibration resistance and absorption of a high torque without any influence on the internal components of the housing are achieved.

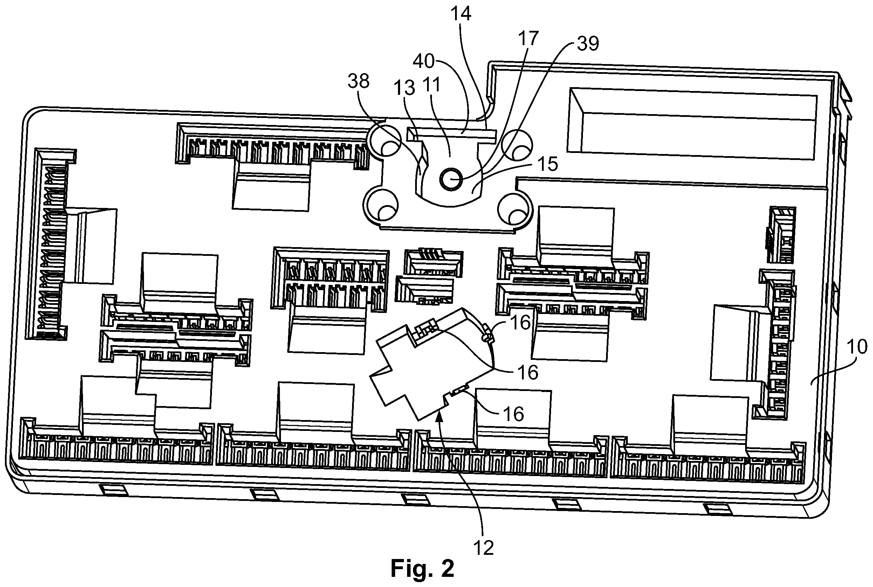

Figure 2 shows a lower side of a housing 10 which is constructed, for example, as a power distributor, in particular for a motor vehicle. The housing 10 has a first recess 11. The first recess 11 serves to receive the connector contact 1. The first recess 11 has a substantially rectangular opening cross-section, a groove 13, 14 being formed in two opposing side walls 38, 39 of the first recess 11, respectively. The grooves 13, 14 are arranged parallel with each other and located in one axis. Side walls of the grooves 13, 14 are arranged in a line with a third side wall 40 of the recess 11. The first recess 11 is delimited at the base by an assembly face 15. A second contact hole 17 is formed in the assembly face 15. The assembly face 15 is part of a circuit carrier which is arranged in the housing. For example, a punched grid or an electrically conductive face may act as an assembly face 15.

In the embodiment illustrated, the grooves 13, 14 are arranged perpendicularly relative to the assembly face 15. Depending on the selected embodiment, other angles may also be used between the longitudinal directions of the grooves 13, 14 and the assembly face 15. In addition, depending on the selected embodiment, the position of the grooves 13, 14 may also be provided in a state laterally offset from the third side wall 40.

The housing 10 has at the lower side a second recess 12, retention means 16, for example, in the form of resilient catch hooks, being provided. The second recess 12 is provided for maintaining a covering cap in a state of readiness. In this embodiment, the retention means 16 protrude beyond the lower side of the housing 10.

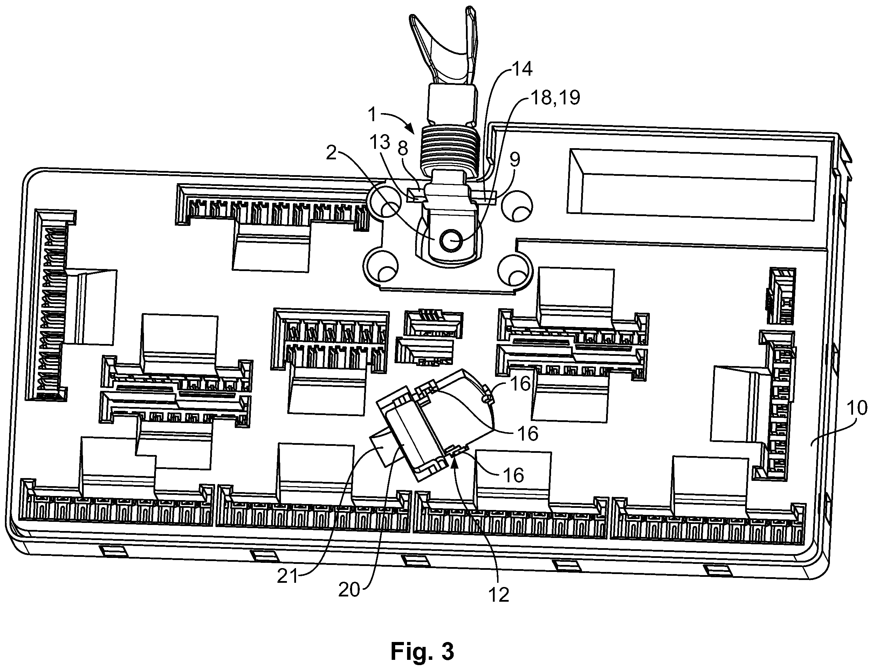

Figure 3 shows the housing 10 with an assembled connector contact 1 and a covering cap 20 which is inserted and provided in a state of readiness. The connector contact 1 is introduced into the first recess 11. The first and second flaps 8, 9 are arranged in the first and in the second groove 13, 14, respectively. In addition, the contact portion 2 is located on the assembly face 15. Furthermore, the contact portion 2 is secured to the assembly face 15 using a bolt 18 and a screw nut 19. The assembly face 15 constitutes an electrically conductive face, via which the electrical contact between the connector contact 1 and electrical components of the housing 10 is produced.

The covering cap 20 is releasably secured to the housing 10 in the second recess 12 using the retention means 16. The securing of the covering cap 20 is provided in order to keep the covering cap 20 in a state of readiness. After the assembly of the connector contact 1, the covering cap 20 is released from the retention means 16 and assembled in the first recess 11 in order to cover the connector contact 1, in particular in order to electrically insulate the connector contact 1. For a simplified removal possibility, a recess 21 is provided in the surface of the housing adjacent to the second recess 12. It is thus possible to grip below the covering cap 20 more easily and to release the covering cap 20 from the retention means 16. The retention means 16 are arranged in the illustrated embodiment at three different positions of the second recess 12. Depending on the embodiment selected, the covering cap 20 may also have retention means for securing in the second recess 12. Owing to the construction of the second recess 12, the covering cap 20 can be at least partially, preferably completely, introduced into the second recess 12. The covering cap 20 is consequently protected against damage and/or inadvertent removal from the retention means 16.

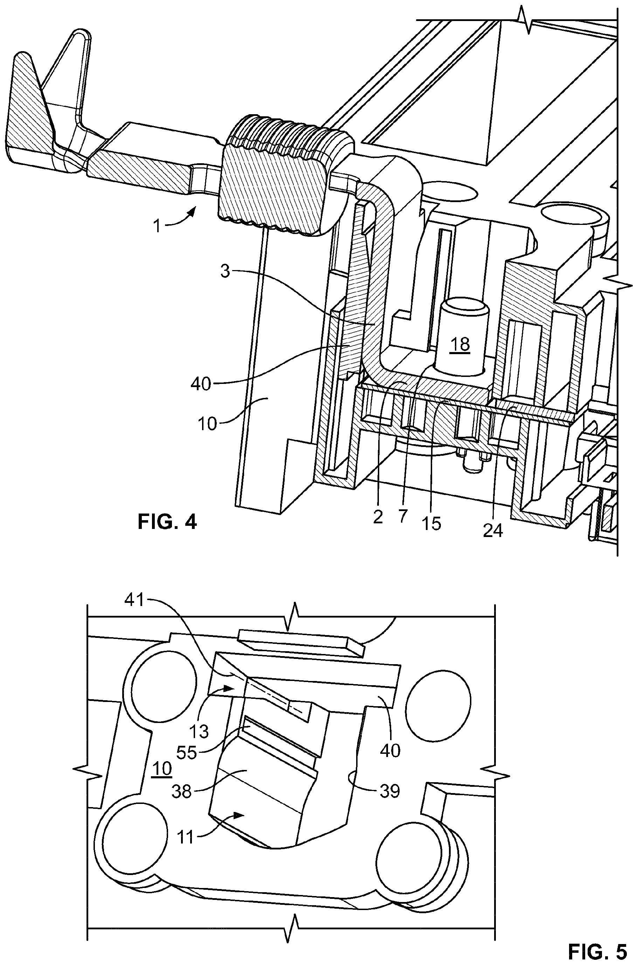

Figure 4 is a schematic illustration of a cross-section through the connector contact 1. In this instance, it can clearly be seen that the guiding portion 3 of the connector contact 1 is supported on the third side wall 40. The third side wall 40 consequently constitutes a support face for the guiding portion 3. Consequently, in addition to the lateral securing of the connector contact 1 in the grooves 13, 14, additional support of the connector contact 1 can be achieved on the housing. In Figure 4, it can clearly be seen that the angle between the contact portion 2 and the guiding portion 3 corresponds to the angle between the assembly face 15 and the third side wall 40 or the longitudinal axes of the grooves 13, 14. Consequently, a large support face is achieved both between the contact portion 2 and the assembly face 15 and between the guiding portion 3 and the third side wall 40. As already set out, angles other than 90° may also be provided between the contact portion 2 and the guiding portion 3 or between the assembly face 15 and the third side wall 40 or the longitudinal axis of the grooves 13, 14.

Figure 5 is a schematic illustration of a partial section of Figure 2 with a perspective view of the first side wall 38 with the first groove 13. In this instance, the longitudinal axis 41 of the first groove 13 is illustrated schematically as a broken line. In the embodiment illustrated, the angle between the longitudinal axis 41 of the first groove 13 and the plane of the assembly face 15 is 90°. In addition, a catch groove 55 is formed in the first side wall 38 with spacing from the upper side of the housing 10. A second catch groove can also be formed in the second side wall 39 opposite the first catch groove 55. The catch grooves serve to engage a retention means which is fitted to the covering cap in order to secure the covering cap to the housing 10. The retention means may, for example, be constructed in the form of catch projections.

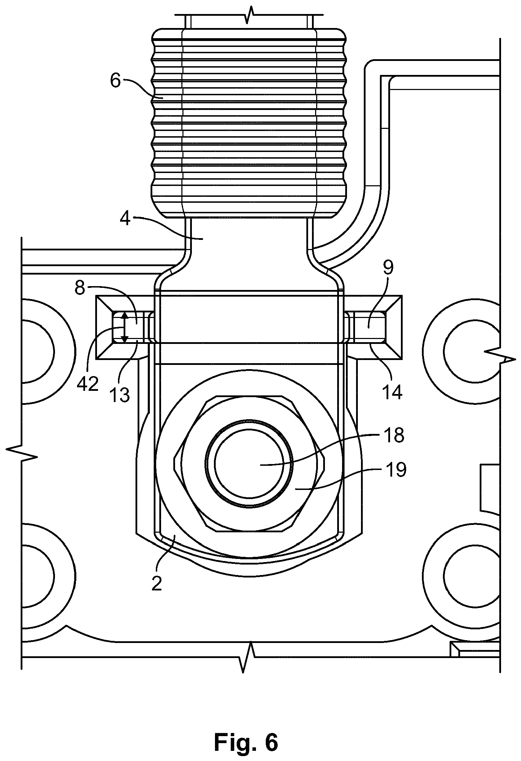

Figure 6 is a schematic plan view of the assembled connector contact 1 of Figure 3, it being clearly visible that the first flap 8 engages in the first groove 13 and the second flap 9 engages in the second groove 14. A width 42 of the grooves 13, 14 is adapted to a width of the flaps 8, 9 in such a manner that the flaps 8, 9 can be inserted into the grooves 13, 14 but have only a small play with respect to pivoting within the grooves.

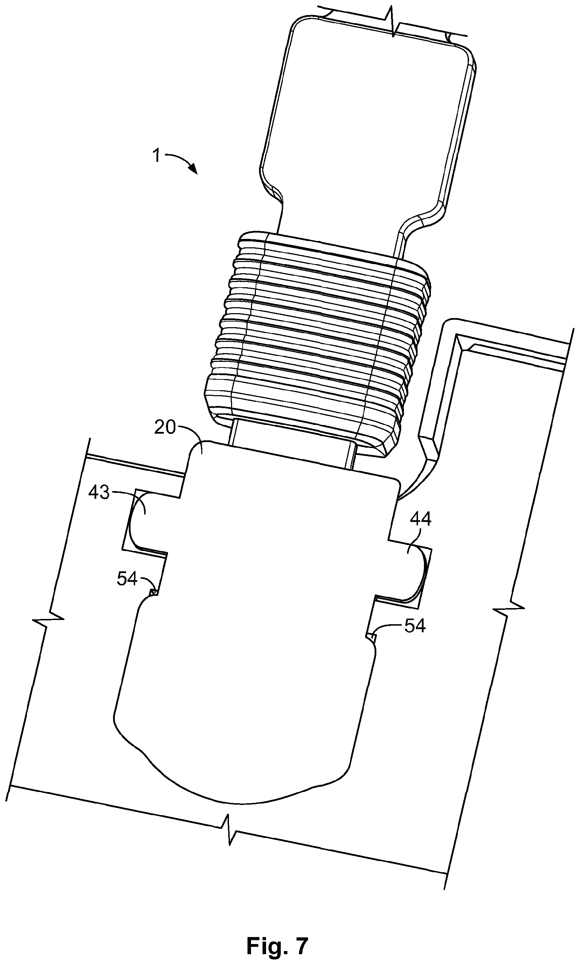

Figure 7 is a schematic partial cut-out of the housing 10 with an assembled connector contact 1, the covering cap 20 being removed from the second recess 12 and being secured in the first recess 11. To this end, there are provided other retention means, such as, for example, catch hooks which secure the covering cap 20 in the first recess 11. The covering cap 20 is constructed in such a manner that the assembled connector contact is covered in the region of the guiding portion, the contact portion and a first portion of the connection piece 4 as far as a location adjoining the sealing member 6. The retention means for retaining the covering cap 20 in the first recess 11 are constructed in a releasable manner. Furthermore, the covering cap 20 has lateral covering flaps 43, 44 which cover the grooves 13, 14. The covering cap 20 is produced from an electrically insulating material so that the connector contact 1 is electrically insulated over large portions. The housing 10 is also produced from an electrically insulating material. The mechanical connection between the connection contact 1 and electrical components, such as, for example, a circuit carrier of the housing 10, is produced using the electrically conductive bolt 18 and the screw nut 19. Depending on the selected embodiment, other electrically conductive connections may also be provided between the connection contact 1 and electrical components of the housing 10.

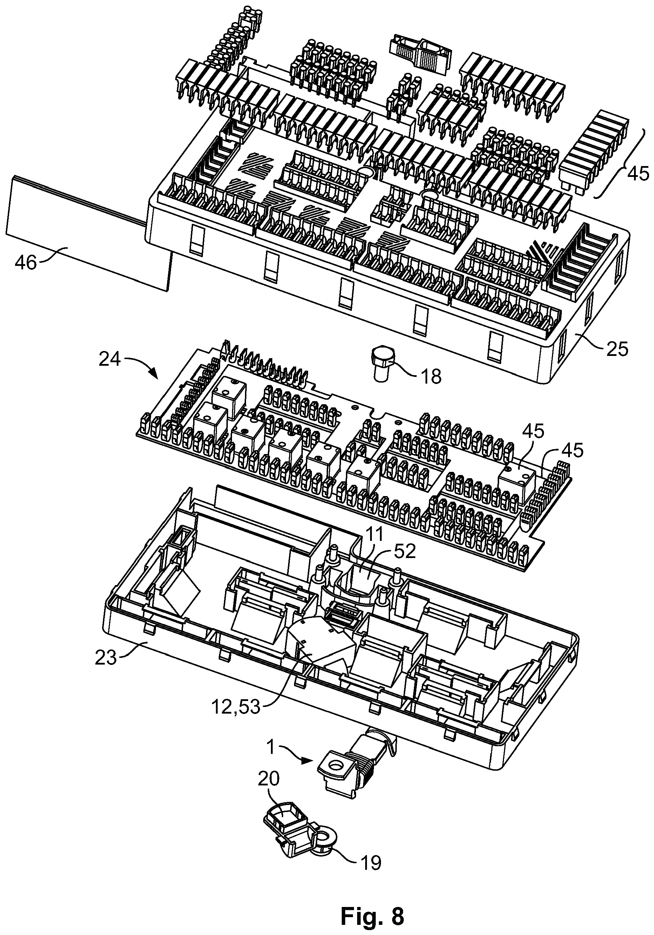

Figure 8 is an exploded view of a lower side of the covering cap 20, the screw nut 19, an inner side of a lower housing portion 23, a circuit carrier 24, the bolt 18, an upper housing portion 25, schematically illustrated components 45, such as, for example, in the form of fuses, and an information card 46. The recess 11 has an open base 52. The second recess 12 is closed with a base 53. The housing 10 is produced by the lower housing portion 23 being connected to the upper housing portion 25, the circuit carrier 24 being arranged therebetween. The lower housing portion 23 and the upper housing portion 25 are mechanically connected to each other by way of catch means. The circuit carrier 24 has electrical components 45, such as, for example, fuses, relays, electrical strip conductors, etcetera. The circuit carrier may, for example, be constructed as a conductor plate. The information card 46 is, for example, in the form of a sheet, in particular a folded sheet of paper, and has information relating to the number and the positions of the fuses and relays of the component 10. The information card 46 is arranged in a third recess of the housing, as will be explained below.

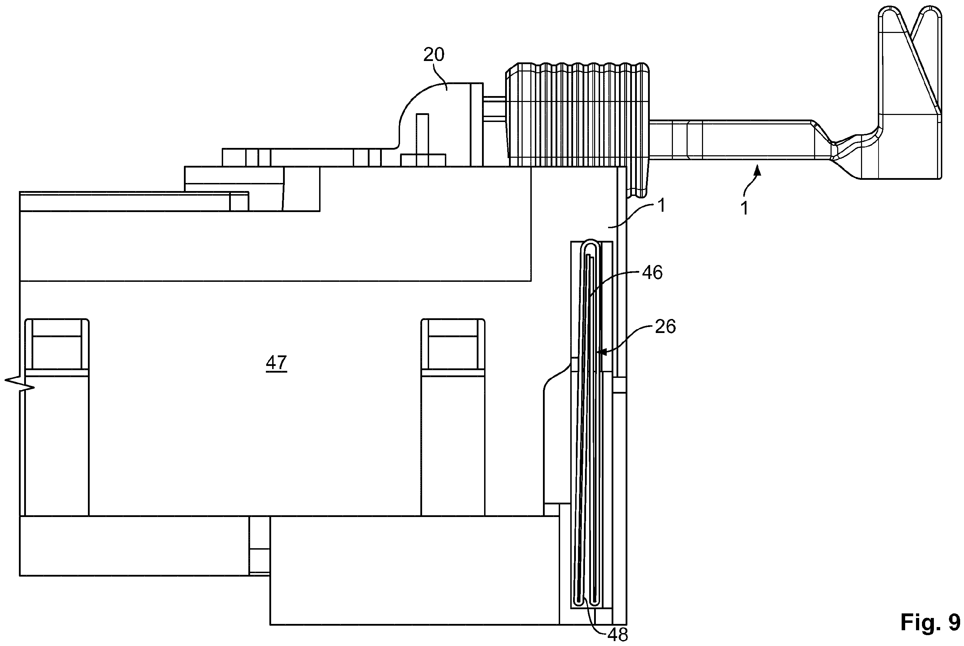

Figure 9 is a side view of the housing 10 in the viewing direction towards a first housing wall 47. At the upper end of the first housing wall 47, there is formed a slot 26 which affords access to the third recess 48. The third recess 48 is provided in order to receive the information card 46.

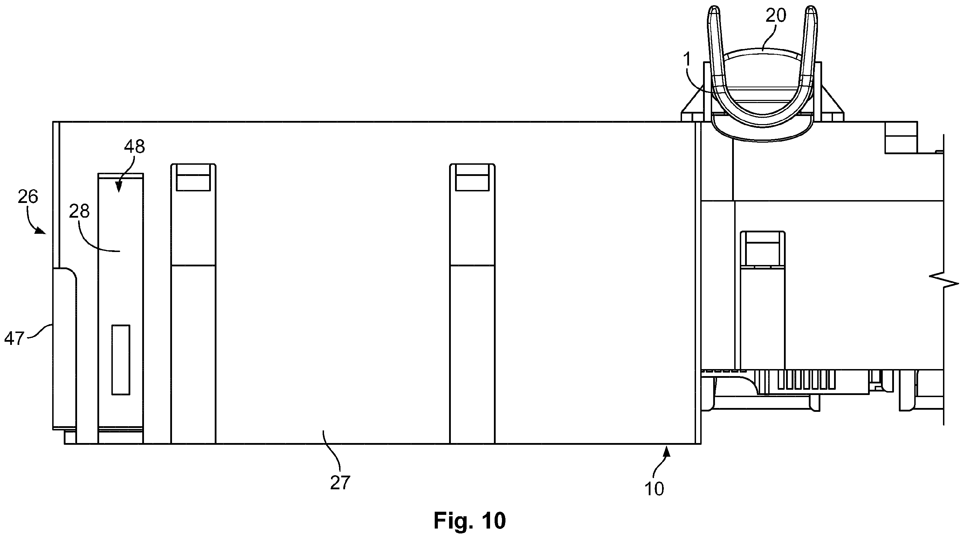

Figure 10 is a side view in the viewing direction towards a second housing wall 27 of the housing 10. The housing wall 46 and the second housing wall 27 are mutually adjacent in the region of the slot 26. In the second housing wall 27, a viewing window 28 is formed and extends as far as the third recess 48. Consequently, it can be visually verified whether the information card 46 is inserted into the third recess 48. The visual verification that the information card has a corresponding code or a corresponding optical pattern can thereby be facilitated. Consequently, using an automatic optical recognition method, it can be verified whether or not the information card is provided in the third recess 48 and whether the information card which corresponds to the housing 10 is provided.

The third recess 48 is, for example, arranged directly beside a LIN module of the power distributor. The structural space present is suitable for this and can be produced in a simple manner in the injection-moulding tool. Accessibility to the outer side is further provided so that the production can carry out the interrogation of the correct card in the inserted state. To this end, a corresponding code is provided for the corresponding information card.

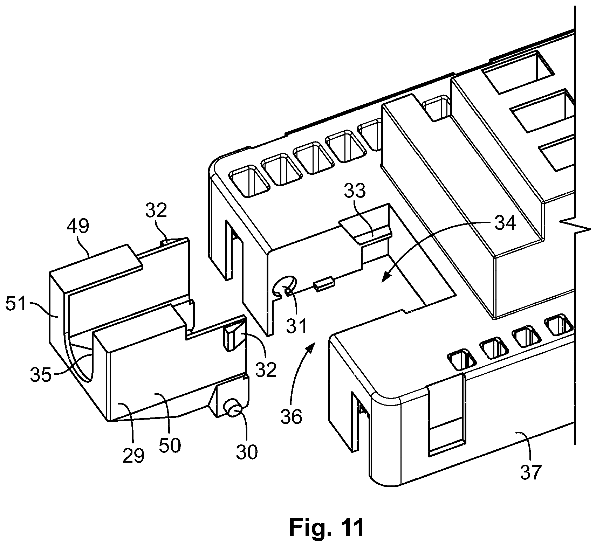

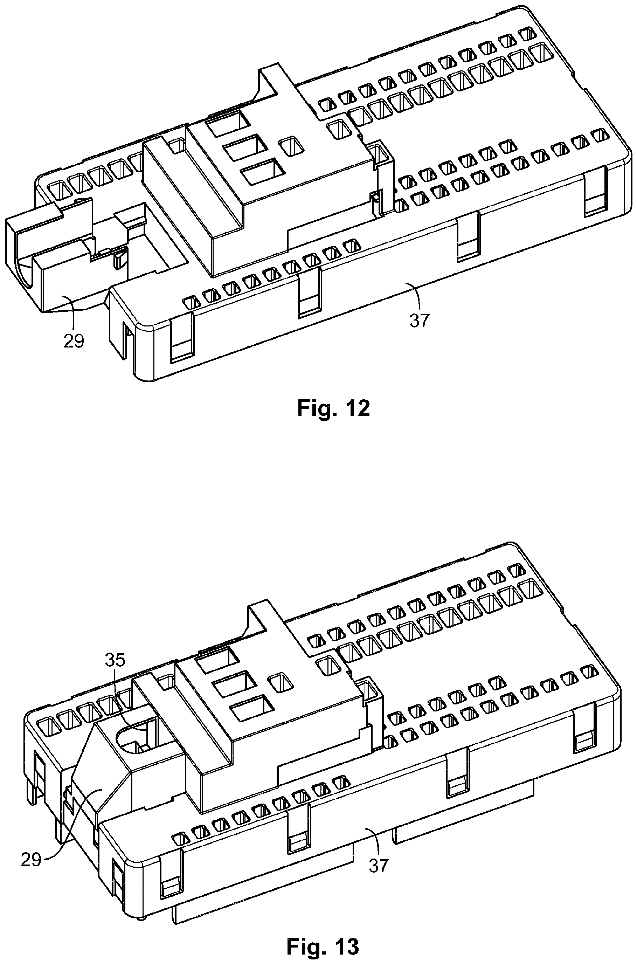

Figure 11 shows an embodiment of another lower housing portion 37 having another recess 34 for receiving an electrical connector contact 1 according to Figure 1. A circuit carrier (not illustrated) is provided below the additional lower housing portion 37. The circuit carrier has for the connector contact an assembly face which is provided in the region of the additional recess 34. The additional recess 34 has a lateral opening 36. In addition, bearing openings 31 are provided on the additional lower housing portion 37 on opposing side walls of the additional recess 34. In addition, catch edges 33 are provided on opposing side walls of the additional recess 34. There is further provided a second covering cap 29 whose width corresponds to the width of the additional recess 34. In addition, the second covering cap 29 has at opposing outer sides a bearing pin 30, respectively. A catch hook 32 is further constructed at the opposing outer sides 49, 50. In addition, the second covering cap 29 has a cable opening 35 at a third outer side 51. In order to assemble the second covering cap 29, the pins 30 are inserted into the bearing openings 31 and the second covering cap 29 is consequently pivotably secured to the additional housing 37, as illustrated in Figure 12.

Figure 12 shows the second covering cap 29 in the open position in which a connector contact 1 can be introduced into the additional recess 34 from above. Subsequently, the second covering cap 29 is pivoted into a closure position, as illustrated in Figure 13. In the closure position, a portion of the connector contact 1 or a cable which is connected to the connector contact 1 is introduced into the second covering cap 29 via the cable opening 35. In the closure position illustrated, the catch hooks 32 of the second covering cap 29 engage behind the associated catch edges 33 of the additional lower housing portion 37 and consequently lock the second covering cap 29 in the illustrated closure position. Depending on the selected embodiment, only one catch hook 32 and only one associated catch edge 33 may also be provided. In addition, the catch hooks may also be provided on the additional lower housing portion and the catch edges on the second covering cap 29.

The second covering cap 29 and the additional lower housing portion 37 are, for example, produced with an injection-moulding method with a tool. Consequently, the second covering cap 29 and the additional lower housing portion 37 may already be produced in one piece using the injection-moulding method. A subsequent assembly of the second covering cap 29 can thereby be dispensed with. Since the covering cap is injected with the additional lower housing portion in the same tool, the covering cap is already rotatably secured to the additional lower housing portion. After the production, the covering cap and the additional lower housing portion are already mechanically coupled to each other in a non-releasable manner and may be transported as one component. In another embodiment, the second covering cap 29 is produced independently of the additional lower housing portion 37 and only subsequently mechanically secured to the additional lower housing portion 37 by means of a bearing, for example, a rotary joint. Using the second covering cap, a galvanically insulating covering for electrical components which carry electrical current is provided such as, for example, power supply lines.

### List of reference numerals

- 1: Connector contact
- 2: Contact portion
- 3: Guiding portion
- 4: Connection piece
- 5: Crimp flap
- 6: Sealing member
- 7: First contact hole
- 8: First flap
- 9: Second flap

- 10: Housing
- 11: First recess
- 12: Second recess
- 13: First groove
- 14: Second groove
- 15: Assembly face
- 16: Retention means
- 17: Second contact hole
- 18: Bolt
- 19: Screw nut

- 20: Covering cap
- 21: Recess
- 23: Lower housing portion
- 24: Circuit carrier
- 25: Upper housing portion
- 26: Slot
- 27: Second housing wall
- 28: Viewing window
- 29: Second covering cap

- 30: Bearing pin
- 31: Bearing opening
- 32: Catch hook
- 33: Catch edge
- 34: Additional recess
- 35: Cable opening
- 36: Lateral opening
- 37: Additional lower housing portion
- 38: First side wall
- 39: Second side wall

- 40: Third side wall
- 41: Longitudinal axis
- 42: Width of the groove
- 43: First covering flap
- 44: Second covering flap
- 45: Component
- 46: Information card
- 47: First housing wall
- 48: Third recess
- 49: First outer side

- 50: Second outer side
- 52: Third outer side
- 52: Open base
- 53: Base
- 54: Additional retention means
- 55: Catch groove

## Claims

1. Housing (10) for a power distributor, in particular for a vehicle, having a recess (11) for receiving an electrical connector contact (1), wherein the recess (11) is delimited laterally by at least one side wall (38, 39, 40) of the housing (10), the at least one side wall having a groove (13, 14), the groove (13, 14) being provided in order to receive a flap (8, 9) of the connector contact (1) when the connector contact (1) is assembled and to orientate the connector contact (1) in the direction towards a desired assembly position and to retain it against rotation in the assembly position, **characterised in that** the housing (10) has additional retention means (16) which are arranged with spacing from the recess (11), that the additional retention means (16) being provided in order to releasably secure a covering cap (20) to the housing (10) and to keep it in a state of readiness for assembly on the recess (11), that the housing has a second recess (12), that the additional retention means (16) being provided in the region of the second recess (12) and that the second recess (12) being provided in order to at least partially receive the covering cap (20).

2. Housing according to claim 1, wherein a second groove (13, 14) is provided in a side wall (38, 39) of the recess, the second groove (13, 14) being provided in order to receive a second flap (8, 9) of the connector contact (1) when the connector contact (1) is assembled and to orientate the connector contact (1) in the direction towards the fixed assembly position and to retain it against rotation in the assembly position.

3. Housing according to either of the preceding claims, wherein a side wall (40) of the recess (11) is provided as a support face for the assembled connector contact (1), the side wall having a face which is constructed so as to be at least partially parallel with an associated guiding face (3) of the connector contact (1).

4. Housing according to any one of the preceding claims, wherein the housing (10) has retention means (54) in the region of the recess (11) in order to releasably secure a covering cap (20) for covering an assembled connector contact on the housing (10).

5. Housing according to either of the preceding claims, wherein the covering cap (20) is releasably secured to the housing (10) using the retention means (16), and wherein the covering cap is in particular at least partially arranged in the second recess.

6. Housing according to any one of the preceding claims, wherein the housing has a third recess (48) the third recess (48) being provided in order to receive an information card (46).

7. Housing according to claim 6, wherein the third recess has a slot, the slot being provided in order to insert the information card (46) into the third recess (48) and/or to remove it from the third recess (48) via the slot.

8. Housing according to either claim 6 or claim 7, wherein the third recess (48) is delimited by a housing wall (27) of the housing (10), a viewing window (28) being formed in the housing wall (27), the viewing window (28) enabling visual verification of the presence of the information card.

## Patentansprüche

1. Gehäuse (10) für einen Leistungsverteiler, insbesondere für ein Fahrzeug, das eine Aussparung (11) zum Aufnehmen eines elektrischen Verbinderkontakts (1) aufweist, wobei die Aussparung (11) von mindestens einer Seitenwand (38, 39, 40) des Gehäuses (10) seitlich begrenzt ist, wobei die mindestens eine Seitenwand eine Nut (13, 14) aufweist, wobei die Nut (13, 14) vorgesehen ist, um eine Klappe (8, 9) des Verbinderkontakts (1) aufzunehmen, wenn der Verbinderkontakt (1) montiert ist, und den Verbinderkontakt (1) in die Richtung hin zu einer gewünschten Montageposition zu richten und ihn drehsicher in der Montageposition zu halten, **dadurch gekennzeichnet, dass** das Gehäuse (10) zusätzliche Haltemittel (16) aufweist, die mit einem Abstand von der Aussparung (11) angeordnet sind, dass die zusätzlichen Haltemittel (16) vorgesehen sind, um eine Abdeckkappe (20) lösbar an dem Gehäuse (10) zu befestigen und sie in einem Bereitschaftszustand zur Montage auf der Aussparung (11) zu halten, dass das Gehäuse eine zweite Aussparung (12) aufweist, dass die zusätzlichen Haltemittel (16) im Bereich der zweiten Aussparung (12) vorgesehen sind, und dass die zweite Aussparung (12) vorgesehen ist, um die Abdeckkappe (20) zumindest teilweise aufzunehmen.

2. Gehäuse nach Anspruch 1, wobei eine zweite Nut (13, 14) in einer Seitenwand (38, 39) der Aussparung vorgesehen ist, wobei die zweite Nut (13, 14) vorgesehen ist, um eine zweite Klappe (8, 9) des Verbinderkontakts (1) aufzunehmen, wenn der Verbinderkontakt (1) montiert ist, und den Verbinderkontakt (1) in die Richtung hin zu der festen Montageposition zu richten und ihn drehsicher in der Montageposition zu halten.

3. Gehäuse nach einem der vorhergehenden Ansprüche, wobei eine Seitenwand (40) der Aussparung (11) als eine Stützfläche für den montierten Verbinderkontakt (1) vorgesehen ist, wobei die Seitenwand eine Fläche aufweist, die so gebaut ist, dass sie zumindest teilweise mit einer zugehörigen Führungsfläche (3) des Verbinderkontakts (1) parallel ist.

4. Gehäuse nach einem der vorhergehenden Ansprüche, wobei das Gehäuse (10) Haltemittel (54) im Bereich der Aussparung (11) aufweist, um eine Abdeckkappe (20) zum Abdecken eines montierten Verbinderkontakts auf dem Gehäuse (10) lösbar zu befestigen.

5. Gehäuse nach einem der vorhergehenden Ansprüche, wobei die Abdeckkappe (20) mittels der Haltemittel (16) lösbar an dem Gehäuse (10) befestigt ist, und wobei die Abdeckkappe insbesondere zumindest teilweise in der zweiten Aussparung angeordnet ist.

6. Gehäuse nach einem der vorhergehenden Ansprüche, wobei das Gehäuse eine dritte Aussparung (48) aufweist, wobei die dritte Aussparung (48) vorgesehen ist, um eine Informationskarte (46) aufzunehmen.

7. Gehäuse nach Anspruch 6, wobei die dritte Aussparung einen Schlitz aufweist, wobei der Schlitz vorgesehen ist, um die Informationskarte (46) in die dritte Aussparung (48) einzuführen und/oder sie über den Schlitz aus der dritten Aussparung (48) zu entfernen.

8. Gehäuse nach Anspruch 6 oder Anspruch 7, wobei die dritte Aussparung (48) von einer Gehäusewand (27) des Gehäuses (10) begrenzt ist, wobei ein Sichtfenster (28) in der Gehäusewand (27) gebildet ist, wobei das Sichtfenster (28) eine visuelle Prüfung des Vorhandenseins der Informationskarte ermöglicht.

## Revendications

1. Boîtier (10) pour un distributeur d'électricité, en particulier pour un véhicule, ayant un renfoncement (11) pour recevoir un contact de connecteur électrique (1), dans lequel le renfoncement (11) est délimité latéralement par au moins une paroi latérale (38, 39, 40) du boîtier (10), la ou les parois latérales ayant une rainure (13, 14), la rainure (13, 14) étant conçue pour recevoir un volet (8, 9) du contact de connecteur (1) lorsque le contact de connecteur (1) est assemblé, et pour orienter le contact de connecteur (1) dans la direction vers une position d'assemblage souhaitée et pour le retenir contre la rotation dans la position d'assemblage, **caractérisé en ce que** le boîtier (10) comporte des moyens de retenue supplémentaires (16) qui sont disposés avec un espacement par rapport au renfoncement (11), **en ce que** les moyens de retenue supplémentaires (16) sont conçus pour fixer de manière amovible un capuchon de recouvrement (20) au boîtier (10) et pour le garder dans un état de disponibilité pour un assemblage sur le renfoncement (11), **en ce que** le boîtier comporte un deuxième renfoncement (12), **en ce que** les moyens de retenue supplémentaires (16) sont disposés dans la région du deuxième renfoncement (12) et **en ce que** le deuxième renfoncement (12) est conçu pour recevoir au moins partiellement le capuchon de recouvrement (20).

2. Boîtier selon la revendication 1, dans lequel une seconde rainure (13, 14) est ménagée dans une paroi latérale (38, 39) du renfoncement, la seconde rainure (13, 14) étant conçue pour recevoir un second volet (8, 9) du contact de connecteur (1) lorsque le contact de connecteur (1) est assemblé, et pour orienter le contact de connecteur (1) dans la direction vers la position d'assemblage fixe et pour le retenir contre la rotation dans la position d'assemblage.

3. Boîtier selon l'une ou l'autre des revendications précédentes, dans lequel une paroi latérale (40) du renfoncement (11) est prévue sous la forme d'une face de support pour le contact de connecteur assemblé (1), la paroi latérale ayant une face qui est construite de sorte à être au moins partiellement parallèle à une face de guidage associée (3) du contact de connecteur (1).

4. Boîtier selon l'une quelconque des revendications précédentes, dans lequel le boîtier (10) comporte des moyens de retenue (54) dans la région du renfoncement (11) afin de fixer de manière amovible un capuchon de recouvrement (20) pour recouvrir un contact de connecteur assemblé sur le boîtier (10).

5. Boîtier selon l'une ou l'autre des revendications précédentes, dans lequel le capuchon de recouvrement (20) est fixé de manière amovible au boîtier (10) à l'aide des moyens de retenue (16) et dans lequel le capuchon de recouvrement est, en particulier, disposé au moins partiellement dans le deuxième renfoncement.

6. Boîtier selon l'une quelconque des revendications précédentes, dans lequel le boîtier comporte un troisième renfoncement (48), le troisième renfoncement (48) étant conçu pour recevoir une carte d'informations (46).

7. Boîtier selon la revendication 6, dans lequel le troisième renfoncement comporte une fente, la fente étant conçue pour insérer la carte d'informations (46) dans le troisième renfoncement (48) et/ou pour la retirer du troisième renfoncement (48) par le biais de la fente.

8. Boîtier soit selon la revendication 6, soit selon la revendication 7, dans lequel le troisième renfoncement (48) est délimité par une paroi de boîtier (27) du boîtier (10), une fenêtre de visualisation (28) étant formée dans la paroi de boîtier (27), la fenêtre de visualisation (28) permettant une vérification visuelle de la présence de la carte d'informations.
